# FASCICULE DE BREVET EUROPEEN

(11) **EP 0 654 661 B1**
(45) Date de publication et mention de la délivrance du brevet: **11.04.2001**
(21) Numéro de dépôt: 94402682.2
(22) Date de dépôt: 23.11.1994
(51) Int. Cl.: G01N 15/14, G01N 15/02

(54) **Détecteur d'intensité lumineuse diffusée par des films de milieux colloidaux**
Streulichtintensitätsdetektor für von Filmen in kolloidalen Medien gestreutes Licht
Intensity detector for light diffused by films in colloidal media

(30) Priorité: 24.11.1993 FR 9314347
(43) Date de publication de la demande: 24.05.1995
(73) Titulaire: INSTITUT FRANCAIS DU PETROLE, 92500 Rueil Malmaison (FR); SEMATECH, F-06200 Nice (FR)
(72) Inventeur: Pinier, Frank, F-06800 Cagnes S/Mer (FR); Woodley, Bill, F-83440 Mons (FR); Patin, Patrick, F-06200 Nice (FR); Frot, Didier, F-94600 Choisy le Roi (FR)

(56) Documents cités:
- EP-A- 0 516 481
- WO-A-91/05995
- DE-A- 3 700 286
- DATABASE WPI Week 8521, Derwent Publications Ltd., London, GB; AN 85-127046 & SU-A-1 121 602 (KAZAN AVIATION INST) 30 Octobre 1984

## Description

La présente invention concerne un dispositif pour mesurer l'intensité de la lumière diffusée par des concentrations élevées de particules ou macromolécules comprises entre quelques nanomètres et plusieurs centaines de microns. Elle s'applique plus particulièrement à la corrélation de photons.

La mesure de l'intensité de la lumière diffusée par des films minces de milieux colloïdaux est notamment visée par la présente invention.

Les mesures de taille de particules par diffusion quasi-élastique de la lumière ou corrélation de photons sont largement utilisées par les professionnels depuis environ 20 ans. Ainsi les document US-A-3 807 864, FR-A-2 300 337, FR-A-2 415 801 ou encore US-A-4 274 740 divulguent ce type de mesures selon lesquelles les particules ou macromolécules d'un diamètre compris entre quelques nanomètres et quelques microns peuvent être caractérisées par cette méthode qui dépend de la théorie de la diffusion de RAYLEIGH.

Pour ce faire, les objets sont introduits dans un liquide (solvant ou non) en très faible proportion. L'échantillon ainsi préparé est introduit dans une cellule de mesure qui est traversée par un faisceau laser focalisé. Le mouvement brownien desdits objets produit des variations temporelles de la lumière diffusée. Ces variations sont directement proportionnelles à la taille des particules.

Ainsi, en utilisant un détecteur optique adapté (spectrodiffusiomètre, spectrogoniomètre etc...), un corrélateur et des méthodes mathématiques de traitement de signal (inversion de Laplace, Transformée de Fourier), on obtient une distribution de fréquences et donc de tailles desdits objets.

L'analyse théorique repose sur la base technique, l'hypothèse connue selon laquelle chaque particule agit comme un diffuseur individuel et qu'il n'y a aucun effet intéractif entre les particules, c'est-à-dire, qu'il n'y a pas de "diffusion multiple", qui limiterait, voire interdirait toute interprétation des variations de la lumière diffusée observée.

Ainsi, les granulomètres submicronique conventionnels par corrélation de photons n'analysent que de très faibles concentrations de particules.

Afin de remédier à cet inconvénient, une solution connue a été d'introduire une fibre optique dans le milieu. Les particules diffusent de la lumière émise au bout de la fibre optique. La lumière rétrodiffusée par les particules retourne par la fibre optique et atteint le détecteur photosensible via un séparateur directionnel pour éviter que de la lumière source n'atteigne le photo-détecteur.

Toutefois, une certaine quantité de lumière est directement réfléchie de la fibre avant même d'en être sorti et atteint le détecteur. Il faut donc la mesurer comme un signal de référence (système hétérodyne).

D'autres voies ont été explorées toujours dans les domaines de rétrodiffusion avec des cellules traditionnelles. Mais dans les deux cas, les effets de réflexions du faisceau incident et la forte diffusion multiple n'ont pas permis d'aboutir à des résultats probants.

L'objet de l'invention est de remédier à ces inconvénients et d'obtenir un signal homodyne, c'est-à-dire sans autre signal de référence. A ces fins, le dispositif limite les effet de la diffusion multiple en utilisant un très petit volume de diffusion qui se présente sous la forme d'un film mince.

De façon avantageuse, la présente invention permet de mieux caractériser tous les milieux colloïdaux, en termes de densité optique, de turbidité, de viscosité et/ou de granulométrie.

Il est connu de faire des mesures de granulométrie et de turbidité sur des colloïdes dont la phase dense est faiblement concentrée. Cependant, l'art antérieur ne permet pas de telles mesures sur des colloïdes absorbants.

Un avantage certain de l'invention est donc de pouvoir réaliser, sur des milieux colloïdaux absorbants, l'ensemble des mesures énoncées ci-dessus et notamment des mesures granulométriques, de turbidité, de densité optique et de viscosité de la phase continue.

De façon particulièrement intéressante, la présente invention peut s'appliquer à des mesures de viscosité sur des liquides thixotropiques c'est-à-dire dont la viscosité évolue avec la contrainte appliquée.

Ainsi, l'invention concerne un dispositif pour mesurer l'intensité de la lumière diffusée par des films minces de milieux colloïdaux comprenant :
- une source lumineuse monochromatique;
- un système optique convergent focalisant ladite source sur ledit film mince à analyser;
- au moins un détecteur photosensible réagissant à la lumière diffusée ou rétrodiffusée par le film mince;
- des moyens de traitement (électronique) du signal issu du (ou des) photodétecteur(s).

De façon caractéristique le système optique comprend un élément dioptrique placé sur le trajet dudit faisceau lumineux et dont l'une des faces constitue une première paroi délimitant ledit film mince, la deuxième paroi délimitant le film mince dans son épaisseur étant constituée par la face inférieure d'un moyen capable d'absorber tout ou partie de l'intensité transmise par ledit film mince. Le système selon l'invention comprend en outre un moyen destiné à positionner ledit moyen vis-à-vis de la face-paroi de l'élément dioptrique c'est-à-dire destiné à contrôler l'épaisseur du film mince à analyser afin d'atteindre les points de fonctionnement appropriés.

Préférentiellement l'élément dioptrique comprend une face sécante orientée de telle sorte qu'elle réfléchit le faisceau issu de ladite source lumineuse afin que le faisceau traverse le film mince perpendiculairement à ladite face-paroi.

Avantageusement un photodétecteur est placé sur un axe perpendiculaire à ladite face sécante de l'élément dioptrique, de telle sorte qu'il observe une zone environnant le point de focalisation de ladite source, où est générée l'intensité lumineuse diffusée.

Selon un mode de réalisation de l'invention, l'élément dioptrique peut être un prisme.

Selon un mode de fonctionnement de l'invention, la source lumineuse et le prisme sont mutuellement disposés de telle sorte que ladite source arrive sur le prisme par sa face en contact avec le film à analyser (mode rétrodiffusé).

Selon un autre mode de fonctionnement de l'invention un photo-détecteur est centré sur l'axe du faisceau réfléchi par la face sécante, en aval dudit film mince et d'un diaphragme de sorte qu'il fonctionne en mode d'analyse de l'intensité transmise.

Le moyen de positionnement peut être muni, sur sa face délimitant la deuxième paroi du film mince, d'un élément absorbant le faisceau incident et destiné à limiter l'intensité lumineuse réfléchie.

Sans sortir du cadre de l'invention ladite source lumineuse et le prisme sont mutuellement disposés de telle sorte que ladite source traverse le film mince à analyser (mode d'analyse de l'intensité diffusée vers l'avant).

Selon ce mode de réalisation de l'invention, un photo détecteur peut être disposé sur l'axe du faisceau transmis, pour recevoir un signal lumineux diffracté.

En outre un photodétecteur peut être placé sur l'axe du faisceau transmis, afin d'analyser l'intensité lumineuse transmise par l'échantillon à analyser.

Avantageusement la face du prisme en contact avec le film mince est évidée pour être utilisée comme cuve d'accueil de l'échantillon à analyser.

Préférentiellement la face inférieure du moyen de positionnement est convexe de façon à réaliser un contact ponctuel avec la première paroi délimitant le film mince.

Le dispositif selon l'invention peut en outre comprendre un moyen permettant de le faire fonctionner sous hautes températures et/ou hautes pressions.

Ainsi le dispositif selon l'invention peut être utilisé pour mesurer la distribution granulométrique ou la viscosité accessibles en diffusion de lumière, et la densité optique ou la turbidité. La granulométrie mesurée est alors comprise entre 1 nm et 10 µm. Utilisée dans le domaine de la diffraction, la présente invention permet de mesurer des granulométries comprises entre 10 µm et 600 µm voire davantage.

Le verre noir (utilisé selon l'un des modes de réalisation de l'invention) absorbe le faisceau incident de la source monochromatique après qu'il ait traversé l'échantillon. Cette absorption évite les problèmes de réflexion par le dioptre liquide/air. Sans le verre noir et selon l'indice de réfraction du liquide, la lumière réfléchie peut atteindre 4% de la lumière incidente.

Par ailleurs, l'utilisation d'un prisme écarte la tâche d'entrée du faisceau de lumière monochromatique et évite ainsi que le détecteur ne l'observe. En effet, selon l'un des modes de réalisation de l'invention, le faisceau de lumière source entre sur l'une des faces verticales du prisme. Il est totalement réfléchi par la face sécante, remonte à la verticale, traverse l'échantillon, ressort sur l'autre face perpendiculaire et est absorbé par le verre noir placé en regard de la face perpendiculaire.

Le détecteur, s'il est en position fixe, à 90° de la face sécante observera donc les rayons diffusés à 135° dans le cas d'un liquide et d'un prisme d'indice de réfraction identique. Dans le cas contraire, le rayon obéira à la formule n1 sin i1 = n2 sin i2 avec n1 l'indice de réfraction du prisme i1 l'angle de diffusion par rapport à la normale de la face supérieure du prisme et i2 égale à 45°.

Si le détecteur est placé dans d'autres conditions, l'angle original de diffusion sera recalculé au moyen des mêmes formules sans oublier que le faisceau subira une deuxième déviation en sortant du prisme et en entrant dans l'air.

L'avantage d'un tel mode de réalisation est donc de supprimer les réflexions de lumière, d'éloigner la tâche d'entrée du faisceau laser et de créer une couche mince d'échantillon limitant ainsi les problèmes de diffusion multiple en milieu concentré. Les premières mesures réalisées ont donné d'excellents résultats pour des concentrations supérieures à 40% de matière solide.

Le dispositif conforme à l'invention peut être réalisé soit en ajoutant un élément supplémentaire aux instruments connus de l'état de la technique, soit en fabriquant un instrument autonome.

Selon un mode de réalisation, le dispositif conforme à l'invention comporte une source monochromatique (LASER), un élément dioptrique (prisme de verre par exemple), une pièce de métal ou de matériau résistant, percé en son centre et soigneusement collé sur la surface horizontale du prisme et formant ainsi un réservoir d'accueil de l'échantillon à analyser, et un cylindre monté sur un micropositionneur, muni à son extrémité inférieure d'un disque de verre noir. Ce disque noir a une face légèrement convexe pour assurer un point de contact évitant ainsi les problèmes de précision de linéarité planaire des deux surfaces.

De façon avantageuse, le faisceau LASER focalisé par une lentille montée sur une unité réglable en X et Y entre, dans un prisme de verre d'angle A=90°, parallèlement à la normale de la face d'entrée. Il est ainsi totalement réfléchi vers le haut par la surface inclinée à 45°, et sort du prisme à 90° de la surface horizontale supérieure. Il traverse l'échantillon à analyser. L'échantillon est en contact direct avec la surface supérieure du prisme.

Son épaisseur varie en fonction de la translation verticale micrométrique d'un positionneur muni d'une pièce de verre comportant une extrémité inférieure noire.

Par ailleurs, on sait que la mesure de l'intensité reçue par un photodétecteur placé sur l'axe du faisceau incident en fonction de l'épaisseur du film liquide analysé, donne :

La densité optique pour un colloïde ayant une phase continue absorbante et une phase dispersée non absorbante.

La turbidité pour un colloïde ayant une phase continue non absorbante et une phase dispersée absorbante.

L'invention permet l'ensemble de ces mesures mais elle peut en outre déterminer la granulométrie, la densité optique, et la turbidité de milieux colloïdaux très absorbants voire noirs. Une mesure de la viscosité de la phase continue peut aussi être réalisée selon la présente invention.

Les mesures nouvellement obtenues selon l'invention ouvrent donc des perspectives très intéressantes dans de nombreux domaines. A titre illustratif peuvent être citées les mesures de viscosité des huiles moteur...

D'autres caractéristiques, détails, améliorations et avantages de la présente invention apparaîtront plus clairement à la lecture de la description qui va suivre faite à titre illustratif et nullement limitatif en référence aux dessins annexés sur lesquels :
- La figure 1 montre, de façon schématique, un dispositif connu d'acquisition.
- La figure 2 montre les effets parasitaires de mesures de rétrodiffusion sur ces instruments classiques.
- La figure 3 illustre, schématiquement, un mode de réalisation conforme à l'invention.
- La figure 4 illustre, schématiquement, les trajets optiques, relatifs au mode de réalisation de la figure 3.
- La figure 5 montre, schématiquement, un autre mode de réalisation de l'invention.
- La figure 6 montre, schématiquement, encore un autre mode de réalisation de l'invention.

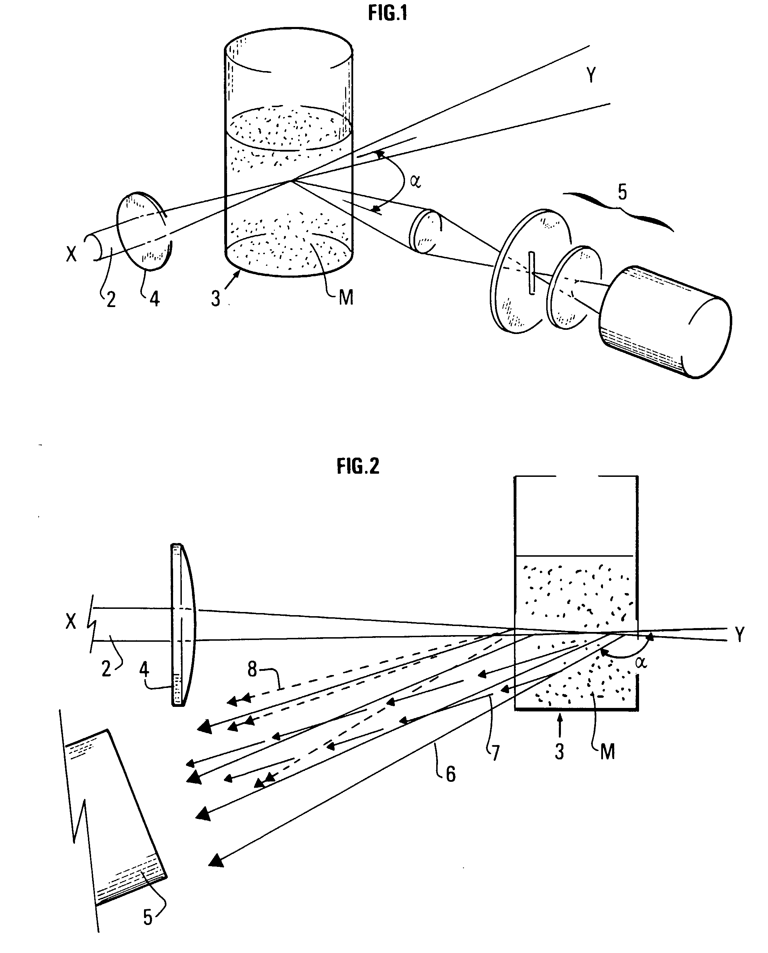

Lesdits instruments classiques de caractérisation de particules submicroniques par corrélation de photons tels que schématiquement décrits sur la figure 1 comportent : un générateur laser (non représenté et non référencé) engendrant un faisceau laser rectiligne 2.

Sur le trajet du faisceau laser 2 est disposée une cuve cylindrique ou à faces parallèles 3 contenant un mélange d'objets, particules ou macromolécules (M).

Le faisceau laser est focalisé au moyen d'une lentille convergente 4 au centre de cette cuve. Les objets (M) peuvent être en solution ou en suspension dans le liquide. Un détecteur 5 comprenant un système optique et une unité photosensible observe le centre de la cuve selon en angle α par rapport à l'axe X Y. L'unité photosensible est ensuite reliée à un calculateur de traitement de signaux (non représenté). Les objets (M) éclairés par le faisceau 2 diffusent de la lumière. Le mouvement brownien des objets produit des variations temporelles de la lumière diffusée. Ces variations sont directement liées à leurs tailles et peuvent être étudiées, par exemple, au moyen d'une analyse de type spectroscopie de corrélation de photons.

Au vu de la figure 2, on comprendra aisément pourquoi ce dispositif connu ne permet pas une analyse d'échantillons concentrés. En effet, le détecteur 5, observant une solution d'objets (M) selon un angle α par rapport à l'axe XY supérieur à 90° (rétrodiffusion), on recevra, en plus du signal caractéristique de diffusion directe 6 les rayons lumineux dus à la diffusion multiple 7, et les rayons de la réflexion du laser 8 entrant dans la cuve 3. Ces derniers rayons lumineux parasites créent un mauvais rapport signal sur bruit ce qui rend impossible l'étude des faibles variations citées ci-dessus.

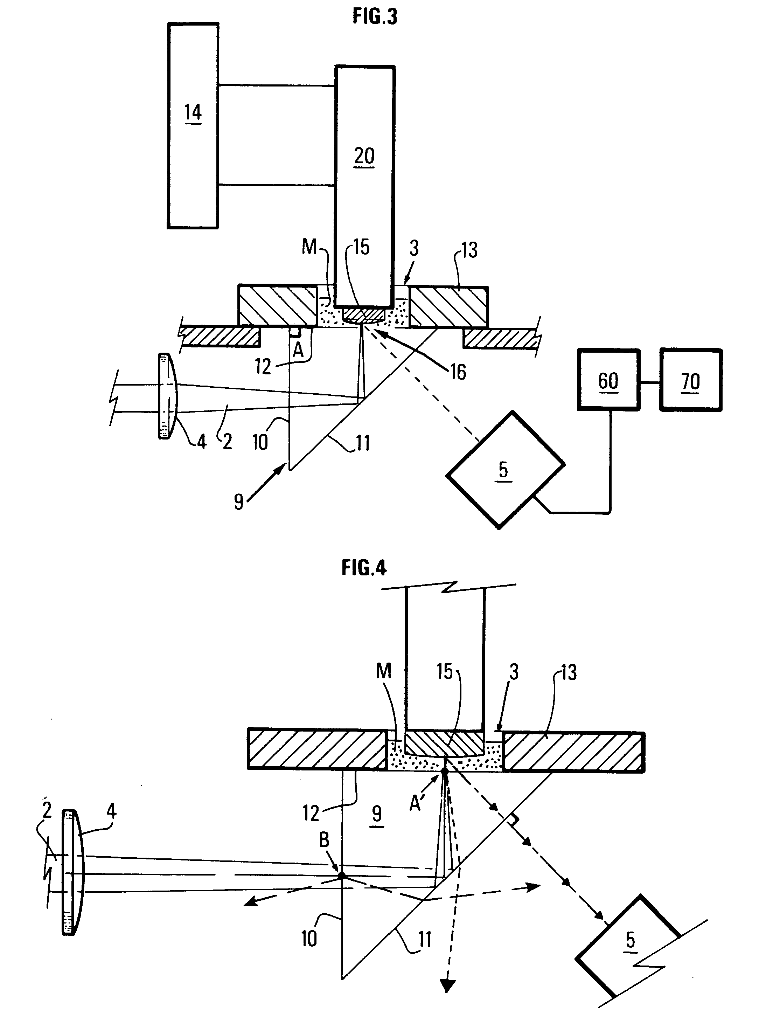

La figure 3 représente en coupe un mode de réalisation d'un dispositif conforme à l'invention. Il comporte en effet un élément dioptrique, en l'occurence un prisme 9 d'angle A = 90°, par exemple en verre, chargé de "réfracter totalement" le faisceau laser 2. Les différentes faces 10, 11, 12 dudit prisme 9 forment chacune un dioptre c'est-à-dire une surface optique séparant deux milieux d'indice de réfraction différents.

Le rayon LASER 2 entre par la normale de la face 10, est totalement réfléchi par la face sécante 11 (du fait qu'il forme un angle supérieur ou égal à l'angle limite de réfraction) et sort ainsi par la normale de la face 12. Par conséquent, la réflexion du faisceau qui intervient sur la face 10 est donc très éloignée du volume d'observation situé sur la face 12.

Selon ce mode de réalisation de l'invention, l'une des faces 12 du prisme est surmontée d'une pièce de métal noir 13 ou d'un autre matériau solide percé en son centre et délimitant l'échantillon contenant les objets M à analyser formant ainsi la cuve d'accueil de l'échantillon 3.

Le dispositif comprend en outre un micropositionneur 14 à mouvement vertical maintenant une pièce 20 dont l'extrémité inférieure est en verre noir 15. Cette pièce de verre noir 15 a la même forme et des dimensions légèrement inférieures à la cuve d'accueil 3. Elle pourra ainsi s'encastrer dans la cuve.

L'élément de verre noir 15 absorbe le faisceau incident et est destiné à limiter l'intensité lumineuse réfléchie, intensité "parasite" qui ne doit pas atteindre le photodétecteur 5, vus les inconvénients cités ci-avant à propos de l'art antérieur.

De façon avantageuse, l'extrémité de verre noir 15 sera légèrement convexe pour assurer un point de contact avec la face 12 et éviter ainsi des problèmes de précision de linéarité planaire entre deux surfaces. La translation micrométrique du positionneur 14 fera varier l'épaisseur de l'échantillon à analyser jusqu'à créer un film mince 16 de quelques microns.

Ainsi, l'interactivité lumineuse entre les objets (M) contenus dans l'échantillon est fortement diminuée du fait que peu d'objets (M) ne pourront se trouver dans le film mince 16. L'expérimentateur choisira les plus faibles épaisseurs de film 16 pour les plus petits objet (M) et inversement. Il est ainsi évident que la création de ce film mince 16 d'échantillon diminue fortement les effets de diffusion multiple décrits précédemment.

La figure 4 conforme au premier mode de réalisation de l'invention, montre plus précisément les trajets optiques. La lentille 4 focalise le faisceau 2 au point B situé sur la face 10. Le détecteur 5, solidement fixé, observe le volume d'échantillon situé au point A'. Il est placé sur un axe à 90° de la face 11. Ainsi, dans le cas d'un liquide d'indice de réfraction identique à celui du matériau constituant le prisme, les rayons diffusés par les objets (M) contenus dans l'échantillon ne subiront pas de déviation et l'angle d'observation par rapport au faisceau incident est ici de 135°.

Dans le cas, par exemple, d'un échantillon aqueux (d'indice de réfraction n₁ = 1,33 et d'un prisme de verre d'indice n₂ = 1,5) le détecteur situé au même endroit que ci-dessus, observe les rayons diffusés à 127° par rapport au faisceau incident. La valeur de cet angle est donnée par la relation n₁sini₁ = n₂sini₂ soit 1,33sini₁ = 1,5 (sin 45°) soit sini₁ =(1,5/1,33)x(√2/2) d'où i₁ =52,89, soit environ un angle de (180-52,9)=127,1° par rapport au faisceau incident.

Selon un mode particulier de réalisation, la cuve 3 contenant l'échantillon à analyser pourra être usinée directement dans la partie supérieure du prisme 9. Elle peut donc être évidée pour être utilisée comme cuve d'accueil de l'échantillon à analyser.

Selon un autre mode de réalisation, le détecteur 5 pourra être mobile et ainsi observer le point B selon divers angles.

Sans sortir du cadre de l'invention, les valeurs des angles du prisme 9 pourront être différentes de celles du dispositif avantageux décrit en figure 3 et 4. Alors la source lumineuse sera focalisée sur l'échantillon, et le détecteur 5 sera positionné de telle sorte qu'il observe les rayons rétrodiffusés et on tiendra compte des déviations dans le prisme 9 qui obéissent à la loi générale n₁sini₁ =n₂sini₂.

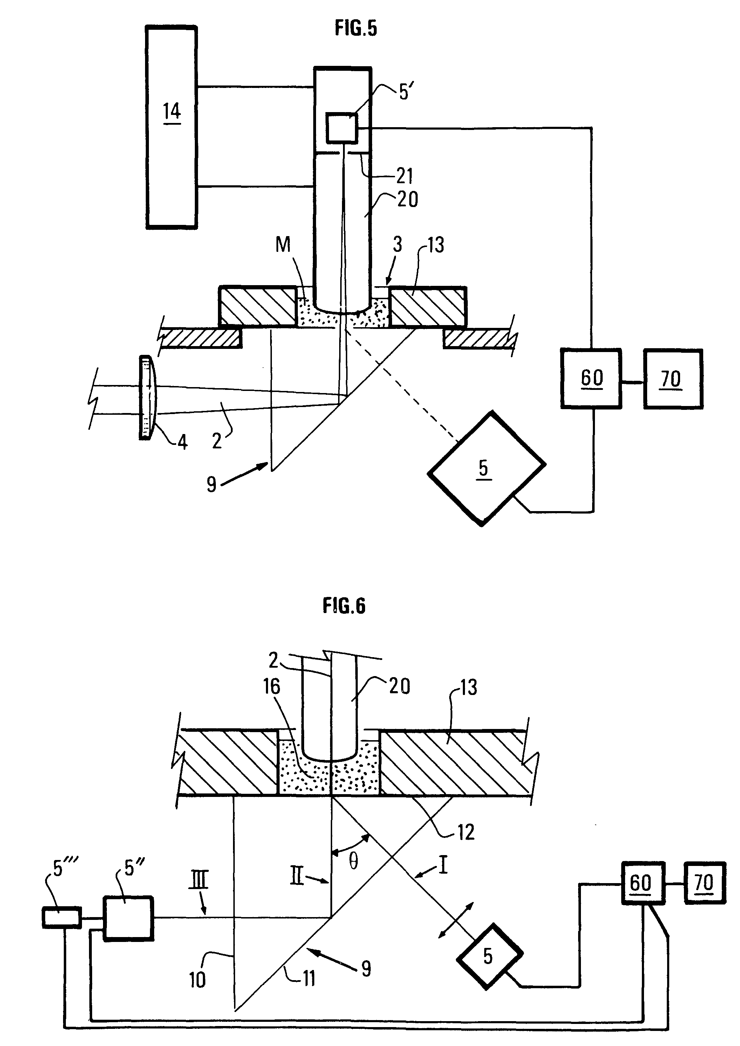

La figure 5 concerne un autre mode de réalisation de l'invention qui diffère de celui qui vient d'être décrit essentiellement par la position et le mode de fonctionnement du photodétecteur.

En outre, conformément à la figure 5, le faisceau incident après avoir traversé l'échantillon, n'est plus absorbé (le verre noir n'existe pas dans ce mode de réalisation) mais il traverse l'élément transparent 20 avant d'atteindre un premier photodétecteur 5' centré sur l'axe du faisceau réfléchi par la face sécante 11.

Un diaphragme 21 est préférentiellement disposé juste devant le photodétecteur 5' qui fonctionne donc en mode d'analyse de l'intensité transmise. Le photodétecteur 5' participe ainsi à la détermination de la densité optique et/ou la turbidité du film mince.

Un second photodétecteur 5 est placé, comme dans le premier mode de réalisation de l'invention, sur un axe perpendiculaire à la face sécante 11 où il observe l'intensité lumineuse diffusée.

Les deux photodétecteurs 5 et 5' sont reliés à un système 60 de traitement électronique et/ou à un système 70 de traitement mathématique.

Le rôle du positionneur micrométrique 14 est ici très important puisqu'il permet un contrôle très précis de l'épaisseur du film mince à analyser.

En effet selon ce mode de réalisation de l'invention, l'intensité lumineuse détectée et analysée par le photodétecteur 5' permet de mieux caractériser le milieu à étudier en obtenant une information supplémentaire. On peut ainsi atteindre le couple épaisseur du film-puissance laser qui correspond à la meilleure analyse granulométrique ou viscosimétrique, et ce pour des milieux noirs ou fortement concentrés.

Par ailleurs les moyens 60 de traitement électronique permettent notamment de suivre l'évolution dans le temps de la tension délivrée par le ou les photodétecteur(s) 5, 5'. Un contrôle de l'intensité délivrée par la source 2 est conjointement prévu.

Ainsi on peut s'assurer de façon permanente que les conditions de fonctionnement sont optimales, et notamment qu'aucun effet thermique ne modifie localement la viscosité de l'échantillon. En d'autres termes la présente invention permet d'éviter en permanence toute surchauffe susceptible de changer localement la viscosité de l'échantillon.

La figure 6 montre un autre mode de réalisation de l'invention selon lequel la source monochromatique 2 traverse successivement l'élément 20 (longitudinalement), le film mince 16 à analyser, la face 12 de l'élément dioptrique 9.

De là, l'intensité diffusée est reprise par le photodétecteur 5 placé sur un axe perpendiculaire à la face sécante 11 du prisme 9. Préférentiellement l'angle d'observation θ entre l'axe du faisceau diffusé I qui tombe sur le photodétecteur 5 et l'axe du faisceau d'origine II, est fixe, de plus faible valeur.

Ce mode de fonctionnement est particulièrement bien adapté à une analyse granulométrique, par diffusion de lumière dynamique, sur des colloïdes peu absorbants, faiblement concentrés puisque le photodétecteur 5 délivre alors aux moyens de traitement 60, 70 une amplitude de meilleur rapport signal sur bruit. La plage granulométrique détectée selon ce mode reste comprise entre environ 1 nm à environ 10 µm.

Par ailleurs l'intensité lumineuse II contenant le signal diffracté par l'échantillon est réfléchie à 90° par la face sécante 11 vers des photodétecteurs 5'', 5'''. Le premier photodétecteur 5" observe l'intensité du signal diffracté tandis que l'autre photodétecteur 5''' peut être placé sur l'axe III du faisceau transmis afin d'analyser l'intensité transmise par l'échantillon à analyser 16.

Bien entendu comme dans les modes de réalisation de l'invention décrits précédemment, des moyens 60 de traitement électronique et/ou des moyens 70 de traitement mathématique, reliés aux photodétecteurs 5, 5'', 5''' permettent de traiter les différents signaux délivrés.

Les photodétecteurs et 5''' 5"' permettent d'observer des granulométries comprises entre 10 µm et 600 µm, pour des colloïdes moyennement absorbants.

En tant que granulomètre et viscosimètre, le dispositif selon l'invention peut fonctionner sous hautes températures et hautes pressions, par tous moyens connus en soi.

Par ailleurs, en tant que viscosimètre, le dispositif conforme à l'invention ne fait subir à l'échantillon aucune contrainte de cisaillement contrairement à certains dispositifs connus.

Par conséquent, un avantage non négligeable de la présente invention réside dans son caractère non intrusif, non perturbant pour l'échantillon à analyser.

## Revendications

1. Dispositif pour mesurer l'intensité de la lumière diffusée par des films minces (16) de milieux colloïdaux comprenant :
- une source lumineuse monochromatique (2);
- un système optique (4) convergent focalisant ladite source sur ledit film mince à analyser;
- au moins un détecteur photosensible (5 ; 5' ; 5'' ; 5''') réagissant à la lumière diffusée ou rétrodiffusée par le film mince;
- des moyens (60, 70) de traitement (électronique) du signal issu du (ou des) photodétecteur(s) (5),
caractérisé en ce que le système optique (4) comprend un élément dioptrique (9) placé sur le trajet dudit faisceau lumineux et dont l'une des faces (12) constitue une première paroi délimitant ledit film mince, en ce que la deuxième paroi délimitant le film mince dans son épaisseur est constituée par la face inférieure d'un moyen (20) capable d'absorber tout ou partie de l'intensité transmise par ledit film mince, et en ce qu'il comprend en outre un moyen (14) destiné à positionner ledit moyen (20) vis-à-vis de la face-paroi (12) de l'élément dioptrique (9) c'est-à-dire destiné à contrôler l'épaisseur du film mince à analyser afin d'atteindre les points de fonctionnement appropriés.

2. Dispositif selon la revendication 1, caractérisé en ce que l'élément dioptrique comprend une face sécante (11) orientée de telle sorte qu'elle réfléchit le faisceau issu de ladite source lumineuse afin que le faisceau traverse le film mince (16) perpendiculairement à ladite face-paroi (12).

3. Dispositif selon la revendication 2, caractérisé en ce qu'un photodétecteur (5) est placé sur un axe perpendiculaire à ladite face sécante (11) de l'élément dioptrique (9), de telle sorte qu'il observe une zone environnant le point de focalisation de ladite source, où est générée l'intensité lumineuse diffusée.

4. Dispositif selon l'une quelconque des revendications précédentes, caractérisé en ce que l'élément dioptrique (9) est un prisme.

5. Dispositif selon la revendication 4, caractérisé en ce que la source lumineuse (2) et le prisme (9) sont mutuellement disposés de telle sorte que ladite source (2) arrive sur le prisme (9) par sa face (12) en contact avec le film à analyser (mode rétrodiffusé).

6. Dispositif selon la revendication 5, caractérisé en ce que un photo-détecteur (5') est centré sur l'axe du faisceau réfléchi par la face sécante (11), en aval dudit film mince (16) et d'un diaphragme (21) de sorte qu'il fonctionne en mode d'analyse de l'intensité transmise.

7. Dispositif selon l'une quelconque des revendications 1 à 5, caractérisé en ce que le moyen (20) est muni, sur sa face délimitant la deuxième paroi du film mince, d'un élément (15) absorbant le faisceau incident et destiné à limiter l'intensité lumineuse réfléchie.

8. Dispositif selon l'une quelconque des revendications 4 à 7, caractérisé en ce que ladite source lumineuse (2) et le prisme (9) sont mutuellement disposés de telle sorte que ladite source traverse le film mince à analyser (mode d'analyse de l'intensité diffusée vers l'avant).

9. Dispositif selon la revendication 8, caractérisé en ce qu'il comprend en outre un photo-détecteur (5") disposé sur l'axe du faisceau transmis, qui reçoit un signal lumineux diffracté.

10. Dispositif selon l'une quelconque des revendications 8 ou 9, caractérisé en ce qu'il comprend en outre un photo-détecteur (5"') placé sur l'axe du faisceau transmis et destiné à analyser l'intensité transmise par l'échantillon à analyser.

11. Dispositif selon l'une quelconque des revendications 4 à 10, caractérisé en ce que la face (12) du prisme en contact avec le film mince est évidée pour être utilisée comme cuve d'accueil de l'échantillon à analyser.

12. Dispositif selon l'une quelconque des revendications précédentes, caractérisé en ce que la face inférieure du moyen (14) de positionnement est convexe de façon à réaliser un contact ponctuel avec la première paroi délimitant le film mince.

13. Dispositif selon l'une quelconque des revendications précédentes, caractérisé en ce qu'il comprend en outre un moyen permettant de le faire fonctionner sous hautes températures et/ou hautes pressions.

14. Utilisation du dispositif selon l'une quelconque des revendications précédentes pour mesurer la distribution granulométrique et/ou la viscosité accessibles en diffusion de lumière, et la densité optique ou la turbidité.

15. Utilisation selon la revendication 14, caractérisée en ce que la granulométrie mesurée est comprise entre 1 nm et 10 µm.

16. Utilisation selon l'une quelconque des revendications 14 ou 15 pour des valeurs de granulométrie comprises entre 10 µm et 600 µm, dans le domaine de la diffraction.

17. Utilisation du dispositif selon l'une quelconque des revendications 1 à 13 pour des mesures de viscosité sur des liquides thixotropiques.

## Patentansprüche

1. Vorrichtung zum Messen der Intensität von, durch dünne Filme (16) kolloider Medien gestreuten Lichts, umfassend:
- eine monochromatische Lichtquelle (2);
- ein gerichtetes optisches System (4), welches diese Quelle auf diesen zu analysierenden dünnen Film fokussiert;
- zumindest einen photosensitiven Detektor (5; 5'; 5"; 5"'), welcher auf das durch den dünnen Film gestreute oder rückgestreute Licht reagiert;
- Mittel (60, 70) zur (elektronischen) Bearbeitung des von dem (oder den) Photodetektor(en) (5) stammenden Signals,
dadurch gekennzeichnet, dass das optische System (4) ein lichtbrechendes Element (9) umfasst, welches auf der Bahn dieses Lichtbündels platziert ist und von dem die eine der Flächen (12) eine erste , diesen Film begrenzende Wand bildet, dadurch dass die zweite, den dünnen Film in seiner Dicke begrenzende Wand durch die Unterseite eines Mittels (20) gebildet wird, das in der Lage ist die ganze oder einen Teil der durch diesen dünnen Film transmittierten Intensität zu absorbieren, und dadurch dass sie im übrigen ein Mittel (14) umfasst, das darauf ausgerichtet ist, dieses Mittel (20) gegenüber der Wandseite (12) des lichtbrechenden Elements (9) zu positionieren, d.h. darauf ausgerichtet ist, die Dicke des dünnen, zu analysierenden Films zu steuern, um die geeigneten Funktionspunkte zu treffen.

2. Vorrichtung nach Anspruch 1, dadurch gekennzeichnet, dass das lichtbrechende Element eine sekante Seite (11) umfasst, die derart ausgerichtet ist, dass sie den von dieser Lichtquelle stammenden Strahl reflektiert, damit der Strahl den dünnen Film (16) senkrecht zu dieser Wandseite (12) durchquert.

3. Vorrichtung nach Anspruch 2, dadurch gekennzeichnet, dass ein Photodetektor (5) auf einer zu dieser sekanten Seite (11) des lichtbrechenden Elements (9) senkrechten Achse derart angeordnet ist, dass er eine Zone überwacht, die den Fokussierungspunkt dieser Quelle umgibt, wo die Streulichtintensität erzeugt wird.

4. Vorrichtung nach einem der vorhergehenden Ansprüche, dadurch gekennzeichnet, dass das lichtbrechende Element (9) ein Prisma ist.

5. Vorrichtung nach Anspruch 4, dadurch gekennzeichnet, dass die Lichtquelle (2) und das Prisma (9) zueinander derart angeordnet sind, dass diese Quelle (2) das Prisma (9) mit seiner Seite (12) in Kontakt mit dem zu analysierenden Film erreicht (Rückstreumodus).

6. Vorrichtung nach Anspruch 5, dadurch gekennzeichnet, dass ein Photodetektor (5') zu der Achse des durch die sekante Seite (11) reflektierten Strahls stromabwärts dieses dünnen Films (16) und eines Diaphragmas (21) derart zentriert ist, dass er im Modus der Analyse der transmittierten Intensität arbeitet.

7. Vorrichtung nach einem der Ansprüche 1 bis 5, dadurch gekennzeichnet, dass das Mittel (20) auf seiner, die zweite Wand des dünnen Films begrenzenden Seite, mit einem Element (15) ausgerüstet ist, das den Zwischenstrahl absorbiert und darauf ausgerichtet ist, die reflektierte Lichtintensität zu begrenzen.

8. Vorrichtung nach einem der Ansprüche 4 bis 7, dadurch gekennzeichnet, dass diese Lichtquelle (2) und das Prisma (9) gegenseitig derart angeordnet sind, dass diese Quelle den zu analysierenden dünnen Film durchquert (Modus der Analyse der Streuintensität nach vorne).

9. Vorrichtung nach Anspruch 8, dadurch gekennzeichnet, dass sie im übrigen einen Photodetektor (5") umfasst, der auf der Achse des transmittierten Strahls angeordnet ist und der eine Diffraktionssignal empfängt.

10. Ansprüche nach einem der Ansprüche 1 bis 9, dadurch gekennzeichnet, dass sie im übrigen einen Photodetektor (5"') umfasst, der auf der Achse des transmittierten Strahls angeordnet ist und darauf ausgerichtet, die durch die zu analysierenden Proben transmittierte Intensität zu analysieren.

11. Vorrichtung nach einem der Ansprüche 4 bis 10, dadurch gekennzeichnet, dass die Seite (12) des Prismas in Kontakt mit dem dünnen Film, vertieft ist, um als Aufnahmegefäß der zu analysierenden Probe verwendet zu werden.

12. Vorrichtung nach einem der vorhergehenden Ansprüche, dadurch gekennzeichnet, dass die untere Seite des Positioniermittels (14) konvex ist, in einer Weise, um einen punktuellen Kontakt mit der ersten, den dünnen Film begrenzenden Seite, zu verwirklichen.

13. Vorrichtung nach einem der vorhergehenden Ansprüche, dadurch gekennzeichnet, dass sie im übrigen ein Mittel umfasst, welches es ermöglicht, sie unter hohen Temperaturen und/oder hohen Drucken arbeiten zu lassen.

14. Verwendung der Vorrichtung nach einem der vorhergehenden Ansprüche, um die der Lichtstreuung zugängliche granulometrische Verteilung und/oder Viskosität und die optische Dichte oder die Trübung zu messen.

15. Verwendung nach Anspruch 14, dadurch gekennzeichnet, dass die gemessene Granulometrie zwischen 1 nm und 10 µm liegt.

16. Verwendung nach einem der Ansprüche 14 oder 15, für Granulometriewerte, die zwischen 10 µm und 600 µm in der Diiffraktionsdomäne liegen.

17. Verwendung der Vorrichtung nach einem der Ansprüche 1 bis 13, für Messungen der Viskosität auf thixotropischen Flüssigkeiten.

## Claims

1. Device for measuring the intensity of the light scattered by thin films (16) of colloidal media comprising:
- a monochromatic light source (2),
- a converging optical system (4) focusing said source on said thin film to be analysed,
- at least one photosensitive detector (5; 5'; 5''; 5''') reacting to the light scattered or back-scattered by the thin film,
- means (60, 70) for (electronic) processing of the signal coming from the photodetector(s) (5),
characterised in that the optical system (4) comprises a dioptric element (9) placed in the path of said light beam and one of the faces (12) of which constitutes a first wall delimiting said thin film, in that the second wall delimiting the thin film in its thickness is constituted by the lower face of a means (20) capable of absorbing all or part of the intensity transmitted by said thin film, and in that it additionally comprises a means (14) designed to position said means (20) opposite the face wall (12) of the dioptric element (9), i.e. designed to control the thickness of the thin film to be analysed in order to reach the appropriate working points.

2. Device according to claim 1, characterised in that the dioptric element comprises a secant face (11) oriented such that it reflects the beam coming from said light source so that the beam passes through the thin film (16) perpendicularly to said face wall (12).

3. Device according to claim 2, characterised in that a photodetector (5) is placed on an axis perpendicular to said secant face (11) of the dioptric element (9) such that it observes a zone surrounding the focusing point of said source in which the scattered luminous intensity is generated.

4. Device according to any one of the preceding claims, characterised in that the dioptric element (9) is a prism.

5. Device according to claim 4, characterised in that the light source (2) and the prism (9) are mutually disposed such that said source (2) enters the prism (9) through its face (12) in contact with the film to be analysed (back-scattered mode).

6. Device according to claim.5, characterised in that a photodetector (5') is centred on the axis of the beam reflected by the secant face (11) downstream of said thin film (16) and of a diaphragm (21) such that it operates in transmitted intensity analysis mode.

7. Device according to any one of claims 1 to 5, characterised in that on its face delimiting the second wall of the thin film, the means (20) is provided with an element (15) absorbing the incident beam and designed to limit the reflected luminous intensity.

8. Device according to any one of claims 4 to 7, characterised in that said light source (2) and the prism (9) are mutually disposed such that said source passes through the thin film to be analysed (forward scattered intensity analysis mode).

9. Device according to claim 8, characterised in that it additionally comprises a photodetector (5'') which is disposed on the axis of the transmitted beam and receives a diffracted light signal.

10. Device according to any one of claims 8 or 9, characterised in that it additionally comprises a photodetector (5''') positioned on the axis of the transmitted beam and designed to analyse the intensity transmitted by the sample to be analysed.

11. Device according to any one of claims 4 to 10, characterised in that the face (12) of the prism in contact with the thin film is hollowed in order to be used as a vessel for receiving the sample to be analysed.

12. Device according to any one of the preceding claims, characterised in that the lower face of the positioning means (14) is convex so as to produce a point contact with the first wall delimiting the thin film.

13. Device according to any one of the preceding claims, characterised in that it additionally comprises a means allowing it to be operated at high temperatures and/or high pressures.

14. Use of the device according to any one of the preceding claims for measuring the grain size distribution and/or the viscosity accessible through light scattering, and the optical density or turbidity.

15. Use according to claim 14, characterised in that the measured grain size lies between 1 nm and 10 µm.

16. Use according to any one of claims 14 or 15 for grain size values lying between 10 µm and 600 µm in the field of diffraction.

17. Use of the device according to any one of claims 1 to 13 for viscosity measurements on thixotropic liquids.
